# EUROPÄISCHE PATENTSCHRIFT

(11) **EP 0 613 837 B1**
(45) Veröffentlichungstag und Bekanntmachung des Hinweises auf die Patenterteilung: **06.08.1997**
(21) Anmeldenummer: 94102894.6
(22) Anmeldetag: 25.02.1994
(51) Int. Cl.: B65G 1/20

(54) **Lager-und Transportgestell für Flächenbauteile**
Storage and transportation rack for flat structural members
Casier de stockage et de transport pour pièces de construction planes

(30) Priorität: 02.03.1993 DE 4306474
(43) Veröffentlichungstag der Anmeldung: 07.09.1994
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Niederprüm, Klaus, D-50126 Bergheim (DE)
(74) Vertreter: Gauger, Hans-Peter, Dipl.-Ing.

(56) Entgegenhaltungen:
- DE-A- 3 619 688

## Beschreibung

Die Erfindung bezieht sich auf ein Lager- und Transportgestell für im wesentlichen gleichformatige Flächenbauteile der durch den Oberbegriff des Patentanspruches 1 angegebenen Gattung.

Bei einem aus der DE-A-41 24 045 bekannten Lager- und Transportgestell dieser Art ist der an jedem Tragarm mit einer zu der Schwenkachse parallelen Biegelinie erhaltene abgewinkelte Abschnitt ausschließlich zu dem Zweck vorgesehen, an dieser Biegelinie einen Begrenzungsanschlag für die Anschlagstellung des Tragarmes zu erhalten. Für die Bereitstellung dieser Anschlagstellung ist dabei der abgewinkelte Abschnitt schmäler ausgeführt als die eigentliche Auflagefläche des Tragarms, sodaß in dem Übergang eine Stufe erhalten wird, in welcher der Tragarm in seiner ausgeschwenkten Abstützlage an dem zugeordneten Träger abgestützt wird.

Bei den Lager- und Transportgestellen dieser Ausbildung wird die von den Tragarmen eingenommene Zwischenlage baumäßig derart vorgegeben, daß in dieser Zwischenlage ein unbehindertes Ablegen eines Flächenbauteils o.dgl. auf den Auflageflächen der Tragarme erfolgen kann und bei diesem Ablegen dann auch die Tragarme unter Mitwirkung der Zugglieder in ihre ausgeschwenkte Abstützlage verschwenkt werden, während gleichzeitig die nächsten Tragarme aus der eingeschwenkten Ruhelage in die Zwischenlage gebracht werden. Die Zwischenlage der Tragarme ist daher eine Art Vorbereitungsstellung, für deren Ansteuerung mit den auf den Tragarmen abzulegenden Flächenbauteilen od.dgl. es im Einzelfall entscheidend darauf ankommen kann, daß eine anfänglich eingenommene Relativlage zu der Auflagefläche der Tragarme nicht mehr verändert wird, wenn die Tragarme anschließend in die Abstützlage verschwenkt werden. Bei den bekannten Gestellen ist diese Zielsetzung noch nicht optimal erreicht.

Die durch die Patentansprüche gekennzeichnete Erfindung löst die **Aufgabe,** ein Lager- und Transportgestell der angegebenen Gattung derart auszubilden, daß bei dem aufeinanderfolgenden Verschwenken der Tragarme aus der Zwischenlage in die Abstützlage Vorkehrungen getroffen werden, welche die auf die Auflagefläche projizierte Relativlage eines darauf abzulegenden Flächenbauteils od.dgl. für die Dauer des Verschwenkens in die Abstützlage im wesentlichen unverändert beibehalten läßt.

Die bei dem erfindungsgemäßen Lager- und Transportgestell vorgesehene Unterteilung des abgewinkelten Abschnittes jedes Tragarmes in wenigstens zwei und optimal in drei zueinander und zu der Auflagefläche abgewinkelte Teilflächen schafft somit eine wichtige Voraussetzung dafür, daß für die Zwischenlage und die Abstützlage der Tragarme eine übereinstimmende Projektionsfläche erhalten wird und damit die Flächenbauteile bei dem Ablegevorgang keine Veränderung ihrer relativen Position zu der jeweiligen Auflagefläche erfahren, während die Tragarme in die Abstützlage verschwenkt werden. Daneben ergeben diese mehreren abgewinkelten Teilflächen auch eine Materialversteifung des abgewinkelten Abschnittes jedes Tragarmes, sodaß das Verschwenken der Tragarme stabilisiert wird. Diese Stabilisierung kann auch unter dem Aspekt noch günstiger beeinflußt werden, daß jetzt auch für die Verankerung der Zugglieder günstigere Voraussetzungen geschaffen sind, die es letztlich auch möglich machen, daß mit einer einheitlichen Ausbildung der Zugglieder eine einfache Veränderungsmöglichkeit des Stapelabstandes unter Beibehaltung des gleichen horizontalen Abstandes zwischen der Vorderkante der Auflageflächen und der jeweils zugeordneten Schwenkachse durchgeführt werden kann.

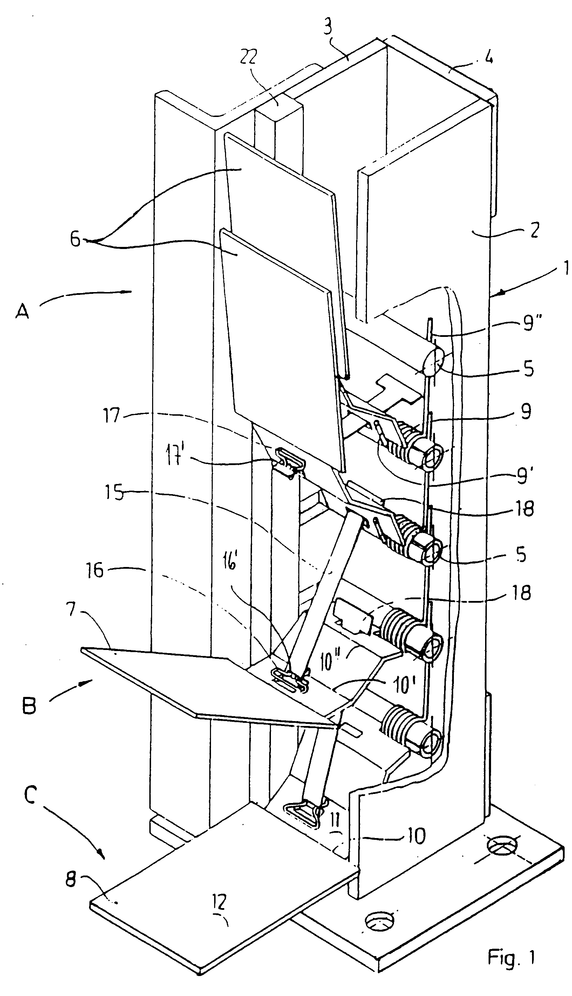

Ein Ausführungsbeispiel des erfindinngsgemäßen Lager- und Transportgestells ist in der Zeichnung schematisch dargestellt und wird nachfolgend näher beschrieben. Es zeigt
- Fig. 1: eine Perspektivansicht des Gestells mit einer Darstellung der unterschiedlichen Schwenklagen der Tragarme, die für die Belastung mit Flächenbauteilen eingenommen werden,
- Fig. 2: eine Seitenansicht des Gestells ebenfalls mit der Darstellung der unterschiedlichen Schwenklagen der einzelnen Tragarme,

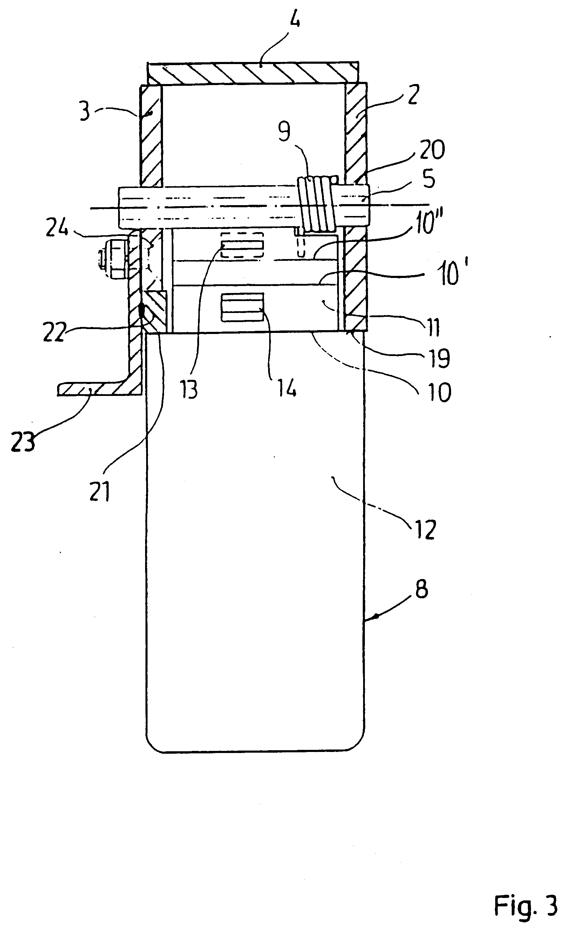

- Fig. 3: eine Schnittansicht zur Darstellung der ausgeschwenkten Abstützlage eines Tragarmes und
- Fig. 4: eine Perspektivansicht eines Tragarmes gemäß einer alternativen Ausbildung.

Das in der Zeichnung gezeigte Lager- und Transportgestell stimmt im wesentlichen überein mit dem bekannten Gestell gemäß der DE 41 24 045 A1, sodaß auch gleiche Bezugsziffern für übereinstimmende Bauteile verwendet sind. Wie bei dem bekannten Gestell sind somit auch hier alle vorhandenen Tragarme in Bezug auf einen jeweils zugeordneten Träger 1, der aus einzelnen Platten 2, 3 und 4 zu einem U-Profil zusammengebaut ist, in einer eingeschwenkten Ruhelage A angeordnet, aus der sie aufeinanderfolgend über eine Zwischenlage B in eine ausgeschwenkte Abstützlage C verschwenkt werden können. An den Trägern 1 sind in gleichen Abständen die Schwenkwellen 5 der verschiedenen Tragarme 6, 7 und 8 gelagert, die jeweils durch eine Rückstellfeder 9 in die für die Tragarme 6 gezeigte Ruhelage A vorgespannt werden.

Die Rückstellfedern 9 sind als Spiralfedern ausgebildet, welche die jeweils zugeordnete Schwenkwelle 5 umgeben und mit dem einen Federende 9' an dem zugeordneten Tragarm anliegen, während das andere Federende 9'' durch die Schwenkwelle des jeweils nächsten Tragarmes abgestützt wird. Anstelle solcher Rückstellfedern können auch Gegengewichte an den Schwenkwellen auf der zu der Abstützseite der Tragarme abgewandten Seite angeordnet sein, sofern das Gestell nur für eine vertikale Aufstellmöglichkeit vorgesehen ist.

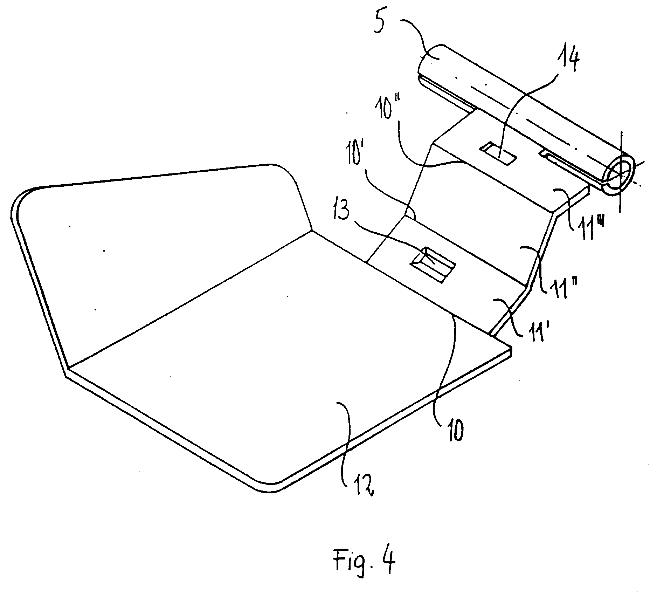

Die einzelnen Tragarme 6, 7 und 8 sind plattenförmig ausgebildet. Die Plattengröße jedes Tragarms ist dabei an einer zu der zugeordneten Schwenkwelle 5 parallelen ersten Biegelinie 10 in einen weniger breiten abgewinkelten Abschnitt 11 und in einen als Auflagefläche für die Flächenbauteile genutzten Abschnitt 12 unterteilt, sodaß in dem Übergang dieser beiden Abschnitte eine Stufe ausgebildet wird, welche an der Biegelinie 10 einen später noch näher erläuterten Begrenzungsanschlag für die Anschlagstellung des betreffenden Tragarmes in Bezug auf den zugeordneten Träger ergibt. Der abgewinkelte Abschnitt 11 ist daneben, wie am besten aus Fig. 4 ersichtlich ist, mit zwei weiteren Biegelinien 10' und 10'' versehen, sodaß insgesamt drei zueinander und zu der Auflagefläche des Abschnittes 12 abgewinkelte Teilflächen 11', 11'' und 11''' vorhanden sind, von welchen die beiden äußeren, der Auflagefläche des Abschnittes 12 und der Schwenkwelle 5 nächsten Teilflächen je mit einer Schlitzöffnung 13 und 14 versehen sind.

Die beiden Schlitzöffnungen 13 und 14 sind etwa auf halber Länge der Schwenkwelle 5 längs einer gemeinsamen Fluchtlinie senkrecht zu der Schwenkachse ausgebildet und ergeben eine Verankerungsmöglichkeit für Zugglieder 15, die vor den Schwenkachsen der Tragarme auf deren Abstützseite angeordnet sind. Die Zugglieder 15 verbinden benachbarte Tragarme jeweils mit einer derart bemessenen Zuglänge, daß bei dem Verschwenken eines Tragarmes aus seiner Zwischenlage B in die Abstützlage C der über ein solches Zugglied verbundene nächste Tragarm aus seiner Ruhelage A in die Zwischenlage B verschwenkt wird. Diese wirksame Zuglänge jedes Zuggliedes begrenzt somit eine Totgangverbindung zwischen zwei benachbarten Tragarmen, die damit erhalten wird, daß jedes Zugglied 15 mit einem streifenförmigen Blechband ausgebildet ist, welches durch die Schlitzöffnungen 13 und 14 von zwei benachbarten Tragarmen hindurchgesteckt ist. Das durch die eine Schlitzöffnung 13 eines Tragarms hindurchgesteckte eine Ende jedes Zuggliedes wird dabei an diesem Tragarm durch zwei zu beiden Seiten der zugeordneten Teilfläche 11' angeordnete Drahtfedern 16 und 17, die in zwei zueinander beabstandete Stanzöffnungen 16' und 17' des Blechbandes federnd eingesteckt sind, verankert, während das durch die Schlitzöffnung 14 des benachbarten Tragarmes hindurchgesteckte andere Ende des Zuggliedes an einer T-förmigen Ausbildung 18 eine somit die Zuglänge des Zuggliedes bestimmende Verankerung erfährt.

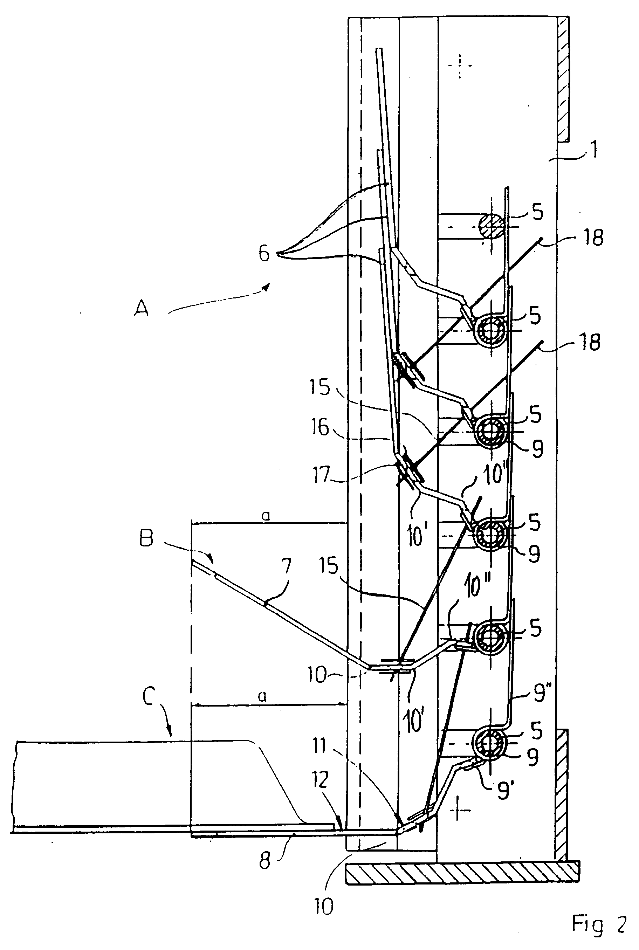

Wie insbesondere aus der Darstellung der Fig. 2 ableitbar ist, kann daher für die als Verbindungsteile zwischen benachbarten Tragarmen benutzten Zugglieder 15 vorausgesetzt werden, daß ihre wirksame Zuglänge durch den gegenseitigen Abstand des mit den beiden Drahtfedern 16, 17 erhaltenen Fixpunktes an dem einen Streifenende und die T-förmige Ausbildung 18 an dem anderen Streifenende festgelegt wird. Diese wirksame Zuglänge wird dabei nur für das Verschwenken der Tragarme aus der eingeschwenkten Ruhelage A in die Zwischenlage B benötigt, sodaß andererseits sowohl in einer übereinstimmenden Ruhelage A wie auch in einer übereinstimmenden Abstützlage C zweier benachbarter Tragarme eine Totgangverbindung vorliegt. Wenn somit die Tragarme aus der Zwischenlage B in die Abstützlage C verschwenkt werden, dann sind bei diesem Verschwenken die Zugglieder 15 funktionslos. Die einzelnen Biegelinien des abgewinkelten Abschnittes 11 jedes Tragarmes sind nun derart ausgebildet, daß zunächst mit der Biegelinie 10 ein Begrenzungsanschlag 19 für eine Anschlagstellung des Tragarmes an dem zugeordneten Träger 1 erhalten wird, die somit seine ausgeschwenkte Abstützlage C festlegt. Der Begrenzungsanschlag 19 ergibt sich dabei präziser bezüglich der einen Platte 2 des zugeordneten Trägers 1, in welcher die Lagerstellen für die Schwenkwellen 5 durch einzelne Bohrungen 20 ausgebildet sind. Ein weiterer Begrenzungsanschlag 21 ergibt sich andererseits bezüglich einer Anschlagleiste 22, die mittels eines Anschlagwinkels 23 an der anderen Platte 3 des Trägers abnehmbar verschraubt ist. Mit dem Anschlagwinkel 23 werden die zweiten Lagerstellen der Schwenkwellen 5 aller Tragarme gesichert, die an der Platte 3 mit Lagerschlitzen 24 entsprechend dem Teilungsabstand der Lagerbohrungen 20 ausgebildet sind. Auch wird mit diesem Anschlagwinkel 23 eine Anschlagfläche für die Flächenbauteile erhalten, wenn sie von den Tragarmen aufgenommen werden.

Wie nun insbesondere aus der Fig. 2 ableitbar ist, wird mit der die Abstützlage C jedes Tragarmes festlegenden Anschlagstellung, welche sich aus dem mit der Biegelinie 10 erhaltenen Begrenzungsanschlag ergibt, ein horizontaler Abstand a der Schwenkachse des Tragarms zu der parallelen Vorderkante erhalten, welcher die für die Auflage der Flächenbauteile zur Verfügung stehende Projektionsfläche der Auflagefläche des Abschnittes 12 festlegt. Dieser horizontale Abstand a ist mit einer übereinstimmenden Größe auch für die Zwischenlage B der Tragarme vorgegeben. Diese Vorgabe wird durch den gegenseitigen Abstand der Biegelinie 10 mit den beiden weiteren Biegelinien 10' und 10'' resp. dadurch erfüllt, daß die durch diese Biegelinien zueinander und zu dem als Auflagefläche genutzten Abschnitt 12 abgewinkelten Teilflächen 11', 11'' und 11''' derart bemessen sind, daß sich für die Zwischenlage B und die Abstützlage C jedes Tragarmes ein gleicher horizontaler Abstand a ergibt.

## Patentansprüche

1. Lager- und Transportgestell für im wesentlichen gleichformatige Flächenbauteile, mit parallel zueinander gestellfest angeordenten Trägern (1), die gemäß einer einheitlichen Teilung in Vertikalrichtung gleich beabstandete Lagerstellen für die Schwenkachsen (5) einzelner Tragarme (6, 7, 8) aufweisen, welche jeweils entgegen einer Rückstellkraft aus einer eingeschwenkten Ruhelage (A) über eine zur gemeinsamen Belastung mit einem Flächenbauteil gleichzeitig bei allen Trägern (1) bereitgehaltene Zwischenlage (B) in eine durch eine Anschlagstellung an einem Träger begrenzte ausgeschwenkte Abstützlage (C) verschwenkbar sind, wobei das in der Reihe aufeinanderfolgende Verschwenken der Tragarme (6, 7, 8) von der Ruhelage (A) in die Zwischenlage (B) durch Zugglieder (15) gesteuert wird, die an den Tragarmen verankert und jeweils vor der Schwenkachse (5) der Tragarme auf deren Abstützseite angeordnet sind sowie eine wirksame Zuglänge haben, mit welcher das aufeinanderfolgende Verschwenken der Tragarme (6, 7, 8) aus der Ruhelage (A) in die Zwischenlage (B) gesteuert wird, wobei jedes Zugglied (15) mit einem streifenförmigen Blechband ausgebildet ist und eine mit seiner wirksamen Zuglänge begrenzte Totgangverbindung mit seinen mit Schlitzöffnungen (13, 14) versehenen Verankerungen an den beiden jeweils zugeordneten Tragarmen aufweist, wobei die Schlitzöffnungen (13, 14) paarweise in einem der Schwenkachse (5) nahen und durch eine zu der Schwenkachse parallele Biegelinie (10) abgewinkelten Abschnitt (11) jedes Tragarms (6, 7, 8) ausgebildet sind, der an der Biegelinie (10) einen Begrenzungsanschlag für die Anschlagstellung seiner Auflagefläche (12) ergibt,
dadurch **gekennzeichnet,** daß der abgewinkelte Abschnitt (11) jedes Tragarms (6, 7, 8) durch wenigstens eine weitere Biegelinie (10', 10'') in zwei zueinander und zu der Auflagefläche (12) derart abgewinkelte Teilflächen (11', 11'', 11''' ) unterteilt ist, daß sich für die zu der Schwenkachse (5) parallele Vorderkante der Auflagefläche (12) ein im wesentlichen gleich großer horizontaler Abstand (a) zu der Schwenkachse (5) sowohl in der Zwischenlage (B) wie auch in der Abstützlage (C) der Tragarme (6, 7, 8) ergibt.

2. Lager- und Transportgestell nach Anspruch 1, bei welchem der abgewinkelte Abschnitt (11) durch zwei parallele Biegelinien (10', 10'') in drei wechselseitig derart abgewinkelte Teilflächen (11', 11'', 11''' ) unterteilt ist, daß die mittige Teilfläche (11'') größer ist als die der Auflagefläche (12) und der Schwenkachse (5) nahen äußeren Teilflächen (11', 11''' ).

3. Lager- und Transportgestell nach Anspruch 1 oder 2, bei welchem jeweils eine der beiden für die Verankerung der Zugglieder (15) vorgesehenen Schlitzöffnungen (13, 14) jedes Tragarmes (6, 7, 8) in jeder der beiden äußeren abgewinkelten Teilflächen (11', 11''' ) ausgebildet ist.

4. Lager- und Transportgestell nach einem der Ansprüche 1 bis 3, bei welchem die an der einen Schlitzöffnung (13) vorgesehene Verankerung jedes Zuggliedes (15) durch zwei zu beiden Seiten der einen Teilfläche (11') des abgewinkelten Abschnittes (11) angeordnete Drahtfedern (16, 17), Federklammern od.dgl. erhalten ist, die in zwei zueinander beabstandete Stanzöffnungen (16', 17') des durch die eine Schlitzöffnung (13) hindurchgesteckten einen Endes jedes Zuggliedes (15) federnd eingesteckt sind und im Zusammenwirken mit einer T-förmigen Ausbildung (18) des durch die zweite Schlitzöffnung (14) der zweiten Teilfläche (11''' ) des benachbarten Tragarmes hindurchgesteckten zweiten Endes des Zuggliedes dessen wirksame Zuglänge bestimmen.

## Claims

1. Rack for storing and handling panel-shaped elements of essentially the same format, comprising stanchions (1) arranged in parallel and fastened at the rack, which comprise, in correspondence with a uniform subdivision in the vertical direction, equidistant hearing points for supporting the pivots (5) of individual supports (6, 7, 8) whereof each is pivotable in opposition to a restoring force, from a retracted inoperative position (A) via an intermediate position (B), which is available simultaneously for all stanchions (1) for joint charging with a panel-shaped element, into a supporting position (C) which is limited by a stop position at said, with the pivoting movements in succession of said supports (6, 7, 8) from said inoperative position (A) into said intermediate position (B) being controlled by means of tension rods (15) which are anchored at said supports and disposed in front of the respective pivot (5) of said supports on their support sides and which present an effective traction length so as to control the pivoting movement of said supports (6, 7, 8) in succession from their inoperative position (A) into their intermediate position (B), with each tension rod (15) being so configured that it presents a sheet metal strip and a backlash connector limited by its effective traction length for connection to its anchorage points at the two respectively associated supports which are provided with elongate openings (13, 14) which are provided in pairs in a bent section (11) of each support (6, 7, 8), which section is adjacent to said pivot (5) and bent by means of a bending line (10) parallel to the pivot, said section forming a limiting stop for the stop position of its supporting surface (12),
**characterized in** that said section (11) of each support (6, 7, 8) is subdivided by at least one additional bending line (10', 10'') into two sub- surfaces (11', 11'', 11''') which are bent with respect to each other and to said supporting surface (12) so as to form a horizontal spacing (a), substantially of the same length relative to said pivot (5) for the leading edge of said supporting surface (12) in parallel with said pivot (5), not only in the intermediate (B) but also in the supporting position (C) of said supports (6, 7, 8).

2. Storing and handling rack according to Claim 1, wherein said bent section (11) is subdivided by two parallel bending lines (10', 10'') into three sub-surface (11', 11'', 11''') which are bent in alternation to either side so that the middle sub-surface (11'') is larger than the outside sub-surface (11', 11''') adjoining said supporting surface (12) and said pivot (5).

3. Storing and handling rack according to Claim 1 or 2, wherein the respective one of said two elongate openings (13, 14) which are provided for anchoring said tension rods (15) in each support (6, 7, 8) is formed in each of said two outside bent sub-surface (11, 11''').

4. Storing and handling rack according to any of the Claims 1 to 3, wherein the anchoring of each tension rod (15), which is provided in one of said elongate openings (13), is achieved by means of two wire springs (16, 17), resilient clamps or similar elements on either side of one of said sub-surfaces (1') of said bent portion (11), which are resiliently placed in two mutually spaced punched openings (16', 17') at the first end of tension rod (15), which is inserted through one of said elongate openings (13), and which determine the effective traction length of said tension rod in co-operation with a T-formation (18) of the second end of the tension rod, which is passed through the second elongate opening (14) of the second sub-surface (11''') of the adjacent support.

## Revendications

1. Casier de stockage et de manutention des éléments détachés plats, essentiellement à format égal, comprenant des supports (1) disposés en parallèle et solidaires du casier, qui comprennent, in correspondance avec une séparation uniforme en sens vertical, des points d'appui équidistants pour les pivots (5) des potences individuelles (6, 7, 8) dont chacune est pivotable à l'encontre d'une force de rappel, à partir d'une position de repos escamotée (A) via une position intermédiaire (B), qui est disponible en même temps pour tous les supports (1) pour le chargement commun avec un élément détaché plat, dans une position d'appui (C) qui est limitée par une position d'arrêt au support, les mouvements pivotants successifs desdits potences (6, 7, 8) de la position de repos (A) dans la position intermédiaire (B) étant commandés moyennant des membres tracteurs (15) qui sont ancrés auxdites potences et disposés en avant du pivot (5) respectif desdites potences de leurs côtés d'appui et qui ont une longueur de traction effective à commander le pivotement desdites potences (6, 7, 8) en succession de leur position de repos (A) dans la position intermédiaire (B), chaque membre tracteur (15) étant configuré de façon qu'il présente un ruban en tôle et un raccord à course morte, qui est limité par sa longueur de traction effective, à ses ancrages aux deux potences respectivement affectées, qui sont prévus des trous en fente (13, 14), dans lequel lesdits trous en fente (13, 14) sont formés en paires dans une partie (11) de chaque potence (6, 7, 8), qui est proche audit pivot (5) et pliée moyennant une courbe de flexion élastique (10) en parallèle au pivot, ladite partie constituant une butée de limitation pour la position d'arrêt de la surface d'appui (12),
**caractérisé** en ce que ladite partie (11) de chaque potence (6, 7, 8) est divisée par au moins une courbe de flexion élastique (10', 10'') additionnelle
en deux aires partielles (11', 11'', 11''') pliées l'une relativement à l'autre et à ladite surface d'appui (12) de façon à établir pour l'arête avant de ladite surface d'appui (12), qui s'étend en parallèle audit pivot (5), une distance (a) horizontale essentiellement de la même largeur relativement audit pivot (5) non seulement dans la position intermédiaire (B) mais aussi dans la position d'appui (C) desdites potences (6, 7, 8).

2. Casier de stockage et de manutention selon la revendication 1, dans lequel ladite partie pliée (11) est divisée par deux courbes de flexion élastique parallèles (10', 10'') en trois aires partielles (11', 11'', 11''') qui sont pliées alternativement d'un côté à l'autre de façon que l'aire partielle centrale (11'') soit plus grande que les aires partielles extérieures (11', 11''') qui sont proches à ladite surface d'appui (12) et audit pivot (5).

3. Casier de stockage et de manutention selon la revendication 1 ou 2, dans lequel respectivement un desdits deux trous en fente (13, 14), qui sont disposés pour l'ancrage desdites membres tracteurs (15) dans chaque potence (6, 7, 8) est formé dans chacune desdites deux aires partielles extérieures pliées (11', 11''').

4. Casier de stockage et de manutention selon une quelconque des revendications 1 à 3, dans lequel l'ancrage de chaque membre tracteur (15), qui est prévu dans l'un desdits trous en fente (13), est achevé moyennant deux ressorts à boudin (16, 17), crapauds élastiques ou éléments similaires des deux côtés de l'une aire partielle (1') de ladite partie plié (11), qui sont posés, à ressort, dans deux trous poinçonnés (16', 17'), écartés l'un de l'autre, de la première extrémité de chaque membre tracteur (15), qui est insérée au travers l'un desdits trous en fente (13), et qui déterminent la longueur de traction effective dudit membre tracteur en coopération avec une formation en T (18) de la deuxième extrémité du membre tracteur, qui est passée au travers du deuxième trou en fente (14) de la deuxième aire partielle (11''') de la potence voisine.
